**Europäisches Patentamt**

**European Patent Office**

**Office européen des brevets**

(11) Veröffentlichungsnummer: **0 236 751**
**A2**

(12) **EUROPÄISCHE PATENTANMELDUNG**

(21) Anmeldenummer: 87101605.1

(22) Anmeldetag: 06.02.87

(51) Int. Cl.³: **C 12 G 1/06**

(30) Priorität: 08.02.86 DE 3604016

(43) Veröffentlichungstag der Anmeldung:
16.09.87 Patentblatt 87/38

(84) Benannte Vertragsstaaten:
ES FR IT

(71) Anmelder: **Sartorius GmbH.**
**Weender Landstrasse 94-108**
**D-3400 Göttingen(DE)**

(72) Erfinder: **Hoffmann, Jürgen, Dr.**
**Gartenstrasse 21**
**D-3414 Hardegsen-Ellierode(DE)**

(72) Erfinder: **Graus, Andreas**
**Siekweg 6**
**D-3400 Göttingen(DE)**

(72) Erfinder: **Köhler, Rudolf**
**An der Mühle 11 A**
**D-3400 Göttingen(DE)**

(74) Vertreter: **Köhler, Rudolf**
**c/o Sartorius GmbH Weender Landstrasse 94-108**
**D-3400 Göttingen(DE)**

(54) **Depot mit selektiv permeablen Scheidewänden in Form von porösen Filtermembranen oder porösen Filterkörpern zur Herstellung gashaltiger Getränke in Behältern und Verfahren zur Herstellung solcher Getränke mittels Depot.**

(57) Zur Herstellung gashaltiger Getränke in Behältern (F) und/oder Veredelung derartiger Getränke in solchen Behältern (F) durch dem Behälterinhalt zugesetzter Wirkstoffe und Wirkstoffträger (W) zur Auslösung chemischer und/oder biologischer Reaktionen und quantitativer Separierung der Restwirkstoffe und Wirkstoffträger (W) aus dem Behälterinhalt nach erfolgter Reaktion, werden die Wirkstoffe und Wirstoffträger (W) in einem in den Behälterinhalt einzulagerndes Depot (D) eingeschlossen, welches zumindest teilweise selektiv permeable, hydrophile Scheidewände (16) aufweist, deren Porengröße bzw. cut off einen Massenaustausch zwischen dem Behälterinhalt und dem im Depot (D) eingelagerten Wirkstoffen erlaubt, jedoch die Wirkstoffträger (W) bzw. im Behälteinhalt unerwünschte Wirkstoffrückstände im Depot (D) zurückhält. Der Druckausgleich und der Gasaustausch zwischen Depotinhalt und Behälterinhalt erfolgt über einen Gasauslaß (31) des Depots (D), welcher auch eine hydrophobe und gasdurch-lässige Filtermembran sein kann. Die Reaktionen werden gesteuert, indem das Depot (D) dem Behälterinhalt wieder entnommen wird, ohne dabei das im Behälter (F) vorhandene Getränk aus dem Behälter (F) entfernen zu müssen. Das Depot (D) weist einen bei aufrechtstehendem Behälter (F) über den Füllstandsspiegel des Getränkes herausragende Handhabe zum leichteren Entfernen des Depots (D) aus der Verschlußöffnung des Behälters (F) auf.

Fig. 33

# 0236751

Sartorius GmbH

Weender Landstraße 94-108

D-3400 Göttingen

Akte SM 8508-EP

Kö/ek

---

Depot mit selektiv permeablen Scheidewänden in Form von porösen Filtermembranen oder porösen Filterkörpern zur Herstellung gashaltiger Getränke in Behältern und Verfahren zur Herstellung solcher Getränke mittels Depot

---

## Beschreibung

Die Erfindung betrifft ein Depot mit selektiv permeablen Scheidewänden in Form von porösen Filtermembranen oder porösen Filterkörpern zur Einlagerung und quantitativen Entnahme von Wirkstoffen und Wirkstoffträgern in Form von Hefen oder Mikroorganismen in Flüssigkeiten zur Herstellung gashaltiger Getränke mittels Gärung oder Fermentation in Behältern.

Unter den vorgenannten Getränken sind insbesondere Bier, Wein, Perlwein, Schaumwein, Sekt und Champagner zu verstehen, die in Behältern der verschiedensten Art einschließlich Flaschen hergestellt; darin veredelt und einem Reifeprozess unterzogen werden. Zur Herstellung derartiger gasbildender bzw. gashaltiger Getränke wird die Flüssigkeit einer Gärung bzw. Fermentation durch Zusatz von Zucker und Hefen ausgesetzt. Die Geschmacksintensität trocken oder halbtrocken oder süß wird durch Zugabe von Zuckerstoffen erreicht. Um eine Nachgärung zu vermeiden, muß vor Zugabe dieser Zuckerstoffe - bei der Sektherstellung handelt es sich um die sogenannte Versanddosage oder Likördosage - die Hefe quantitativ entfernt werden.

Sekt oder Schaumweine sind veredelte Weingetränke, bei denen die Qualität des Endproduktes in erster Linie von der Qualität des verarbeiteten Weines abhängt. Aus dem ursprünglichen Verfahren der Flaschengärung, das zuerst von Dom Perignon angewandt wurde, sind inzwischen weitere Verfahren entwickelt worden. Es ist das Ziel all dieser Verfahren, eine möglichst gute Sektqualität zu erreichen.

Bei der klassischen Flaschengärung nach dem Champagnerverfahren wird durchgegorener Stillwein mit Zucker und Hefen angereichert, so daß nochmals eine Gärung stattfindet, die Kohlensäure freisetzt. Nach Abschluß der zweiten Gärung werden die Trübstoffe in Verbindung mit dem Rüttelverfahren beim Degorgieren entfernt. Eine Filtration wird in diesem Falle nicht durchgeführt (VINUM Nr. 12. 1983, Seite 12 bis 23).

Beim Transversierverfahren, einem abgewandelten Flaschengärverfahren, werden die Flaschen mit dem vergorenen Sekt unter Gegendruck entleert, der Sekt wird ebenfalls unter Gegendruck über eine Filteranlage geklärt und wieder in neue Sektflaschen gefüllt. Der Rüttelvorgang und das Degorgieren werden bei diesem Verfahren durch eine Filtration ersetzt. Dieses Verfahren darf nach den derzeitg gültigen Verordnungen der EWG als Flaschengärung bezeichnet werden. Im Unterschied dazu verbleibt bei dem traditionellen Flaschengärverfahren der Schaumwein in der Flasche.

Das Verfahren der Großraumgärung hat sich bei fast allen Sektkellereien derzeit durchgesetzt, in denen große Mengen Sekt wirtschaftlich hergestellt werden müssen. Hierbei erfolgt nach der zweiten Gärung des Sektes in der Reifezeit eine Sedimentation der Hefe. Der so vorgeklärte Sekt oder Schaumwein wird anschließend über einen Separator geklärt.

SM 8508

- 3 -

0236751

Um die erwünschte Brillanz des Produktes zu erreichen, ist eine weitere Klärung über Schichtenfilter notwendig. Abhängig von den jeweiligen betrieblichen Gegebenheiten wird diese Filtrationsstufe entweder direkt im Separator nachgeschaltet oder erfolgt erst nach der Likördosage bzw. unmittelbar vor Abfüllgang. Die neuzeitliche Schaumwein- und Sektbereitung bedient sich inzwischen hauptsächlich der Filtrationstechnologie (DIE WEINWIRTSCHAFT - TECHNIK Nr. 10-11 Oktober 1985, Seite 336-337).

Die Flaschengärung bietet bezüglich individueller Kontrolle kleiner Mengen, geringerer Verluste durch Fehlgärungen und anerkannter erreichbarer Sekt- und Schaumweinqualität geschmackliche Qualität, z.B. durch Autolyse der Hefe innerhalb der neunmonatigen Lagerung anerkannte Vorteile, die jedoch bisher nicht wirtschaftlich nutzbar gemacht werden konnten, weil das Problem der quantitativen Entfernung von Heferückständen und Trübstoffen aus der Flaschengärung nicht ohne Entleerung des Flascheninhaltes gelöst werden konnte und somit die wesentlichen Vorteile einer Flaschengärung wieder zunichte gemacht worden sind. Angestrebt wird bei einer traditionellen Flaschengärung, daß das darin aufbereitete, veredelte und gereifte Endprodukt in diesen Flaschen als Präsentations- und Verkaufsbehälter verbleibt.

Die nach dem Oberbegriff des Hauptanspruches bekannte Art der Sektherstellung mittels Flaschengärung ist druckschriftlich nachweislich durch die DE-PS 708 253, die US-PS 4,009,285 und die FR-PS 2 537 600 beschrieben.

Die in den drei in Frage stehenden Druckschriften zum Stand der Technik erwähnten Filter in den verschiedenen Filterstrukturen und Filtermaterialien sollen geeignet sein, den Stoffaustausch zwischen der im Depot eingelagerten Hefe und

SM 8508

der umgebenden Flüssigkeit zu ermöglichen. Die Anmelderin hat festgestellt, daß trotz der Wahl einer relativ kleinporigen Filtermembran mit einer Porengröße kleiner als die kleinsten Hefezellen eine quantitative Zurückhaltung der Hefe im Depot nicht möglich war, weil fadenförmige Hefeausleger sich durch die Poren der Membran in die Flüssigkeit den Weg suchen und sich als Hefetrub auf dem Behälterboden ablagern. Der vom Gesetzgeber nach neun-monatiger Lagerung geforderte Eindruck von 5 bar wurde nicht erreicht. Die Membranabschnitte des Depots unterlagen beim Öffnen des Behälters zur Entnahme des Depots einer ungewöhnlichen Druckspitze, die zum Abriß bzw. zum Platzen der Membranfläche führten und damit die quantitative Entnahme der Heferückstände unmöglich machten.

Ähnliche Probleme treten auf bei der 1. und 2. Fermentation von Bier in offenen oder geschlossenen Behältern. So ist aus der EP-OS 133 346 bekannt, Hefe in Filterzellen einzuschließen. Der Flüssigkeitsaustausch und der Gasaustausch zwischen Inhalt der Filterzelle und Inhalt des Behälters soll durch das Filtermaterial erfolgen, wobei die Poren einerseits so klein sein sollen, daß die Hefezellen zurückgehalten werden, die Poren für den Gasaustausch jedoch so groß sein sollen, daß dieser leicht möglich ist. Es handelt sich hierbei um einander gegenläufige Parameter, da die Hefezellen auch durch die größeren Poren wachsen können, andererseits kleinere für den Flüssigkeitsaustausch geeignete Poren durch die in den Poren eingeschlossene Flüssigkeit den Gasaustausch blockieren. Damit kommt es zu einem Druckaufbau innerhalb der Filterzelle bzw. des Depots, wenn die Porengröße auf das Zurückhalten der Hefezellen bestimmt ist und eine quantitative Zurückhaltung der Hefezellen wird nicht erreicht, wenn die Poren so groß gewählt werden, daß ein Gasaustausch möglich ist.

SM 8508

Das bei dem Gärprozess im Depot entstehende Kohlendioxyd wird teilweise als Kohlensäure über die Filterfläche an den Behälterinhalt abgegeben, das gasförmige $CO_2$ soll bei den bekannten Depots aus diesen in den Behälterinhalt entweichen. Wohl nicht nur aufgrund des Druckanstieges im Depot, sondern wohl auch wegen der zunehmenden Übersäuerung, veranlaßt die Hefezellen, fadenförmige Ausleger durch die an sich für die Hefezellen zu kleinen Poren des Filterelementes hindurchwachsen zu lassen, um sich den Zucker aus dem Behälterinhalt zu holen.

Hier setzt die Erfindung ein, deren Aufgabe darin gesehen wird, die Mängel dieser bekannten Vorrichtungen bzw. Verfahren zu beseitigen. Insbesondere liegt der Erfindung die Aufgabe zugrunde, mit einfachen Mitteln die Depots für Wirkstoffe und Wirkstoffträger zur Herstellung gashaltiger Getränke so zu verbessern, daß eine quantitative Zurückhaltung der Wirkstoffträger im Depot über die gesamte Lagerzeit und auch während der Entnahme des Depots aus dem Behälter sichergestellt ist und daß sichergestellt ist, daß alle den Gärprozeß verlangsamende oder hemmende Parameter auf einfache Weise beseitigt werden.

Diese Aufgabe wird erfindungsgemäß dadurch gelöst, daß das Depot einen den Flüssigkeitsaustausch zwischen Depotinhalt und Behälterinhalt fördernden hydrophilen selektiv permeablen Bereich und einen den Gasaustausch und den Druckausgleich zwischen Depotinhalt und Behälterinhalt fördernden Gasauslaß aufweist.

Konkret wird beim Anmeldungsgegenstand die Aufgabe durch drei Lösungsmöglichkeiten alternativ gelöst und zwar, die eine Lösungsmöglichkeit besteht darin, das Depot bei aufrecht stehendem Behälter mit einer möglichst weit über dem Flüssigkeitsspiegel angeordneten Depotöffnung auszu-

SM 8508

statten, und der Depotinhalt mit dem Behälterinhalt sowohl bezüglich der Flüssigkeit als auch des Gasanteiles kommuniziert.

Die zweite Lösung besteht darin, das Depot geschlossen auszubilden und die hydrophilen, den Flüssigkeitsaustausch fördernden Filterabschnitte durch einen den Gasaustausch fördernden hydrophoben und gasdurchlässigen Filterabschnitt zu ergänzen, der seinerseits den Gasauslaß bildet. Das geschlossene Depot ist damit innerhalb des Behälters in der Flüssigkeit lagenunabhängig.

Die dritte Lösungsmöglichkeit besteht darin, den Gasauslaß als eine aus dem Depot und aus dem Behälter herausführende Gasleitung auszubilden und den Flüssigkeitsaustausch, den Druckausgleich und den Gasaustausch zwischen Depotinhalt und Behälterinhalt gezielt zu steuern.

Durch die gezielte Gasabführung aus dem Depot in das Behälterinnere bzw. Gasabführung aus dem Depot und Gaszuführung in das Depot von außen, lassen sich die Gär- und Fermentationsprozesse steuern und durch die besondere Gestaltung des Depots wird sichergestellt, daß die eingelagerten Wirkstoffrückstände quantitativ entnommen bzw. auch wieder zugeführt werden können.

In den weiteren Unteransprüchen sind konstruktive Varianten unter Schutz gestellt.

Der Erfindungsgedanke ist in mehreren Ausführungsbeispielen anhand eines Flaschengärverfahrens und Behältergärverfahrens bei der Sekt- und Schaumweinherstellung beispielsweise näher erläutert.
Dabei zeigt:

SM 8508

Fig. 1        einen Vertikalschnitt durch eine gasdicht verschlossene Sektflasche mit eingelagertem Depot
              während der 2. Gärung,

Fig. 2        eine perspektivische Ansicht des Depots gemäß
              Fig. 1

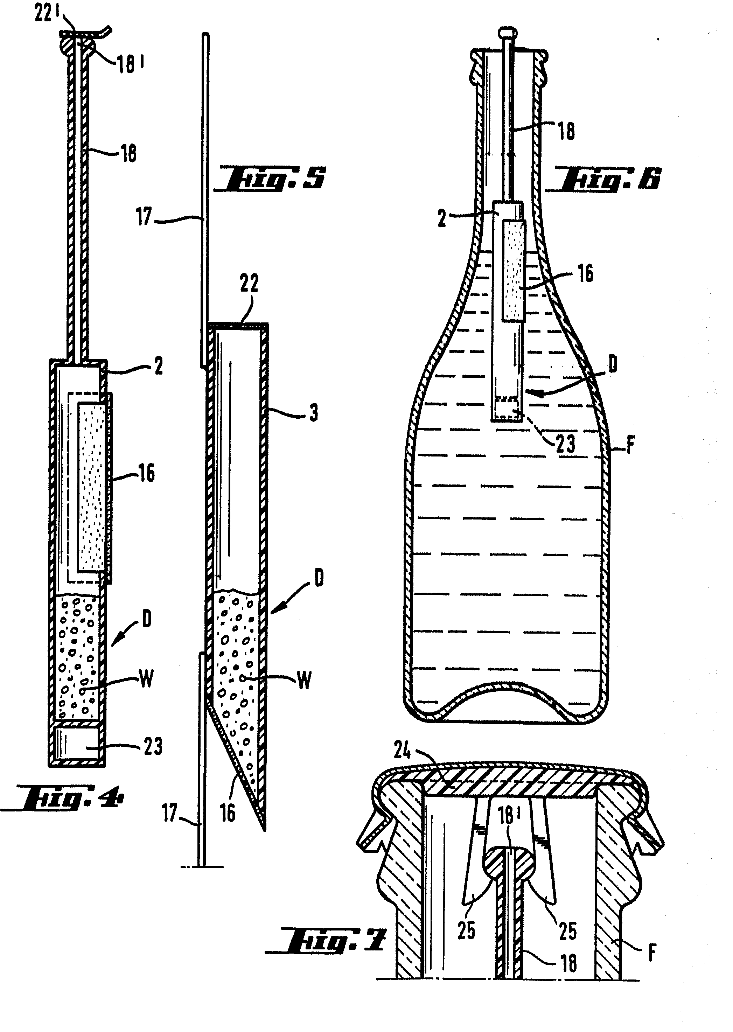

Fig. 3        eine Verschlußfolie für ein oben offenes Depot,

Fig. 4
und   5       Vertikalschnitte durch zwei weitere Depot-
              Varianten,

Fig. 6        einen Vertikalschnitt durch eine geöffnete Sektflasche mit Depot,

Fig. 7        einen Detailschnitt durch einen abgewandelten
              Kronenkorkenverschluß zur Halterung des Depots an
              diesem Verschluß,

Fig. 8
und   9       zwei weitere Depot-Varianten in perspektivischer
              Ansicht,

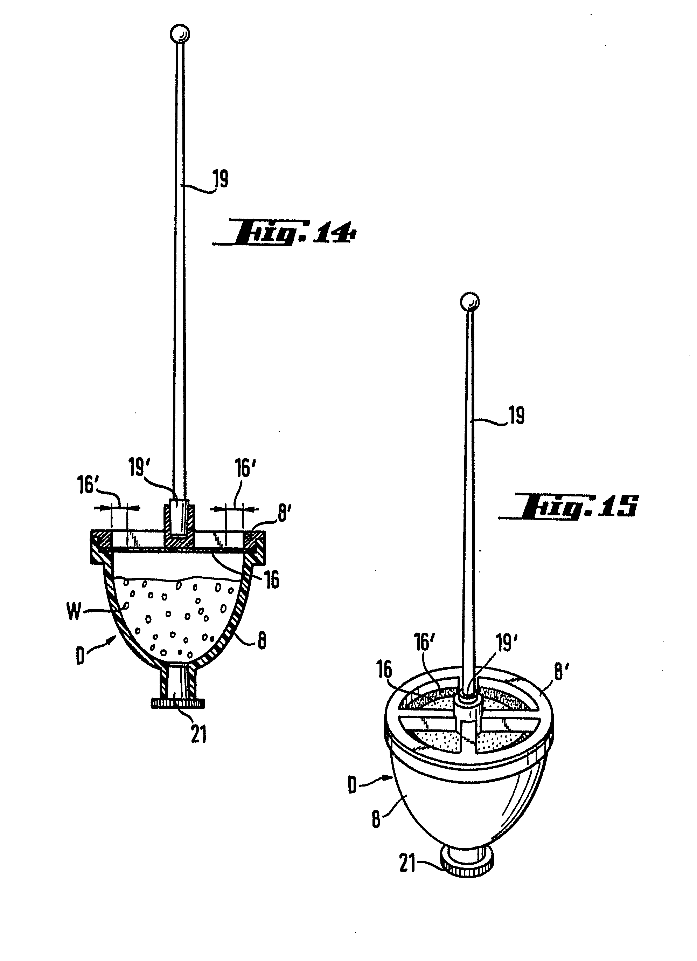

Fig. 10       einen Querschnitt durch das Depot nach Fig. 9
              entsprechend der Linie 10-10,

Fig. 11
und  12       im Vertikalschnitt und Seitenansicht eine weitere
              Depot-Variante,

Fig. 13       einen Vertikalschnitt durch eine geschlossene
              Sektflasche und durch ein schwimmfähiges Depot mit
              Tauchrohr,

SM 8508

Fig. 14
und 15    als Vertikalschnitt und Perspektivansicht eine
          weitere Depot-Variante,

Fig. 16
und 17    in Perspektivansicht und Querschnitt nach der
          Linie 17-17 eine weitere Depot-Variante,

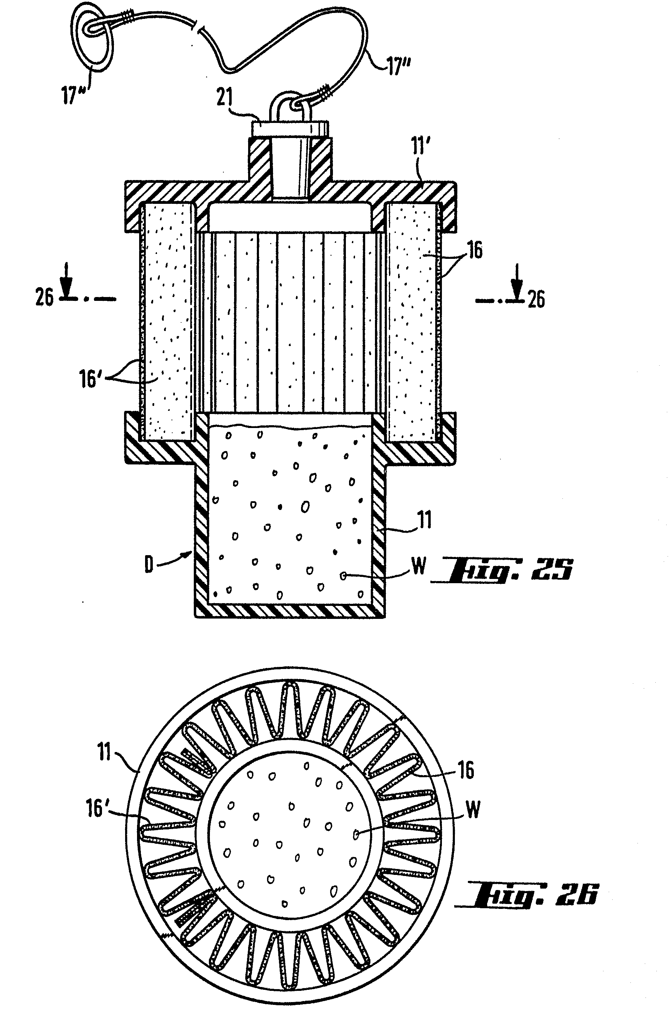

Fig. 18   das horizontal in der Flüssigkeit schwimmende
          Depot nach Fig. 16 und 17 in einem Perspektivschnitt,

Fig. 19
    20    in Perspektivansicht und Querschnitt eine weitere
          Depot-Variante,

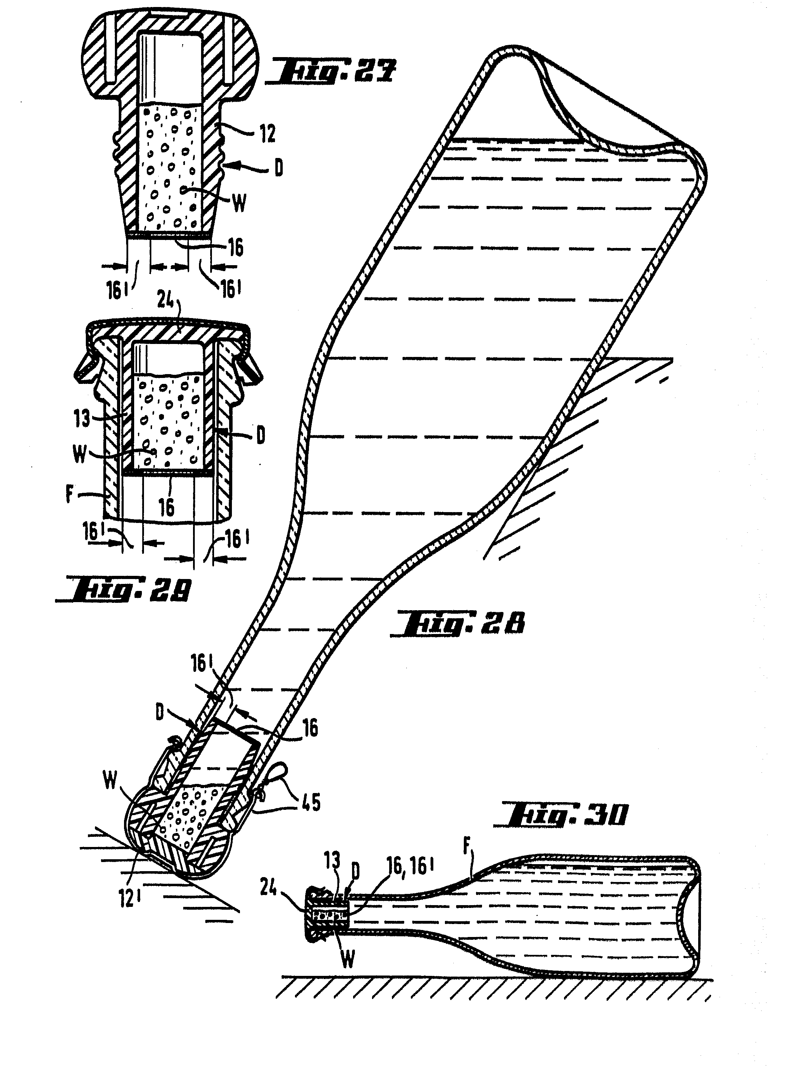

Fig. 21   einen Längsschnitt durch eine stehend gelagerte
          Sektflasche mit eingelagertem schwimmfähigen
          Depot,

Fig. 22   einen Längsschnitt durch eine liegend gelagerte
          Sektflasche,

Fig. 23   einen Längsschnitt durch eine auf dem Kopf stehend
          gelagerte Sektflasche und

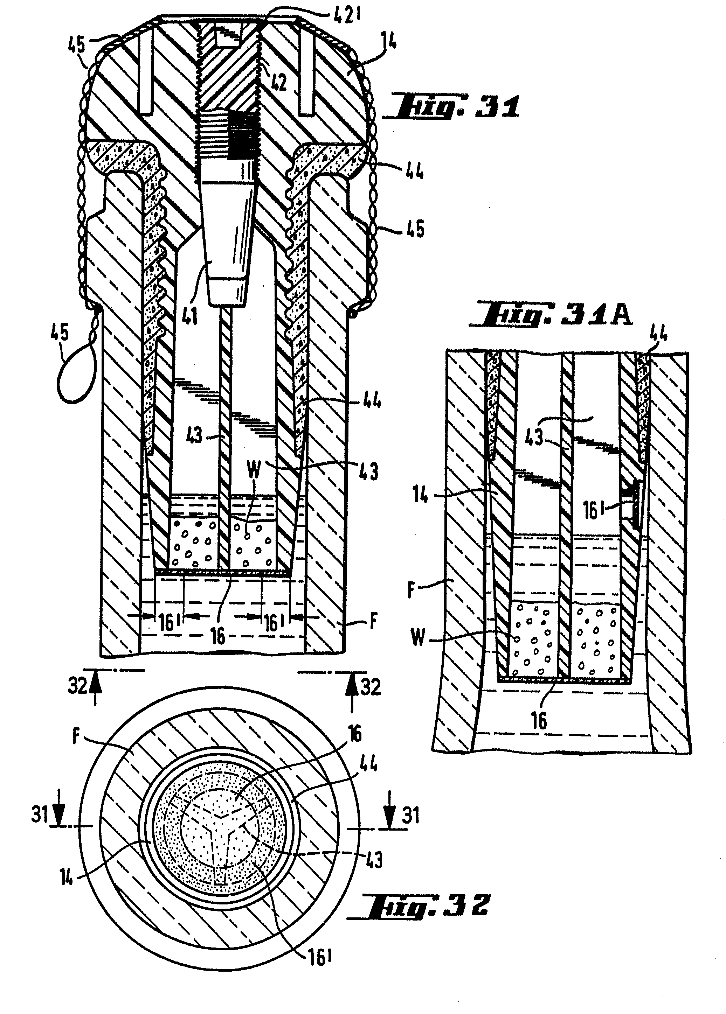

Fig. 24   eine schräg stehend gelagerte Sektflasche mit
          eingelagertem schwimmfähigen Depot,

Fig. 25
und 26    einen Längsschnitt und einen Querschnitt durch ein
          Depot mit vergrößerter Filterfläche,

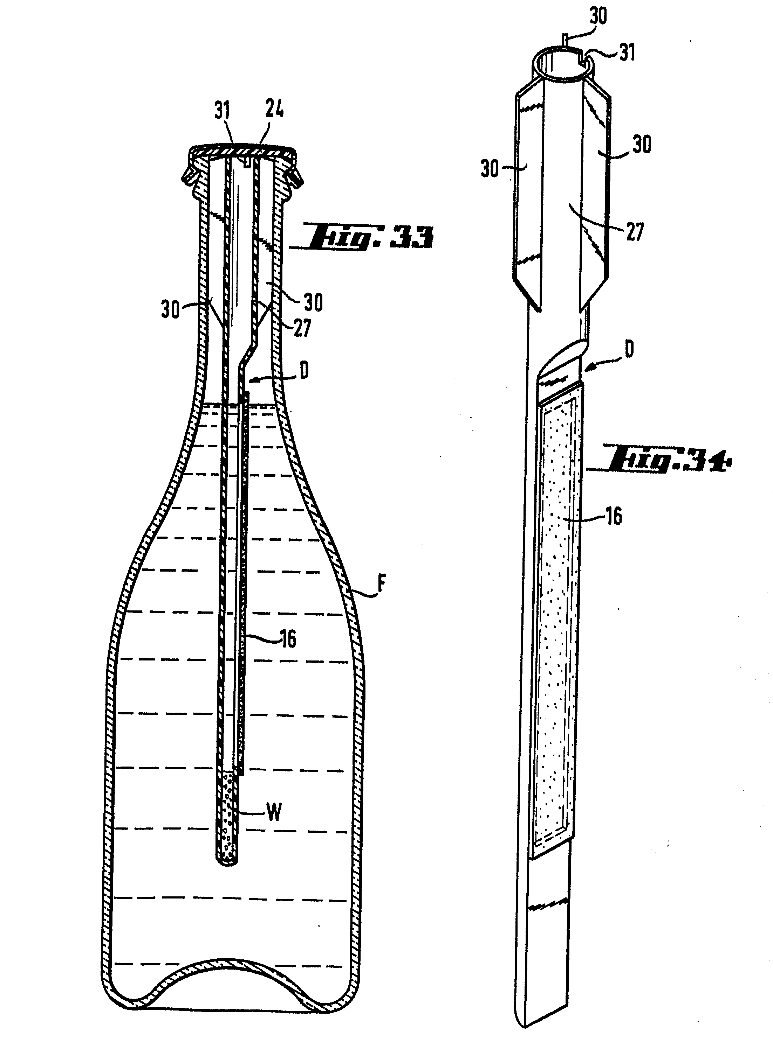

Fig. 27   einen Längsschnitt durch eine weitere Depot-
          Variante in Form eines stopfenförmigen Flaschen-
          verschlusses mit Kopf,

SM 8508

Fig. 28 einen Längsschnitt durch eine Flasche mit abgewandeltem stopfenförmigen Verschluß mit Kopf und
eingeschweißter Kopfplatte,

Fig. 29 einen Längsschnitt durch eine Depot-Variante in
Form eines speziellen Kronenkorkverschlusses,

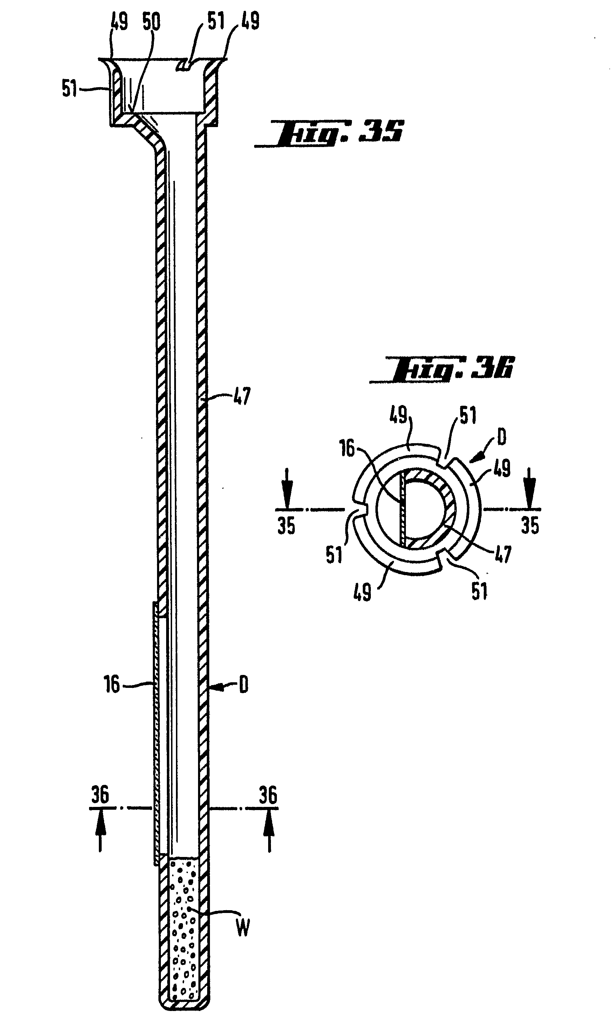

Fig. 30 einen Längsschnitt durch diesen Kronenkorkververschluß mit Sektflasche in liegender Lagerung,

Fig. 31 einen Vertikalschnitt durch einen stopfenförmigen
Flaschenverschluß mit Kopf und einer Füllöffnung
im Kopf,

Fig. 31A eine Variante zu Fig. 31

Fig. 32 eine Untersicht unter den Verschluß nach Fig. 31
entsprechend der Linie 32-32 in Fig. 31,

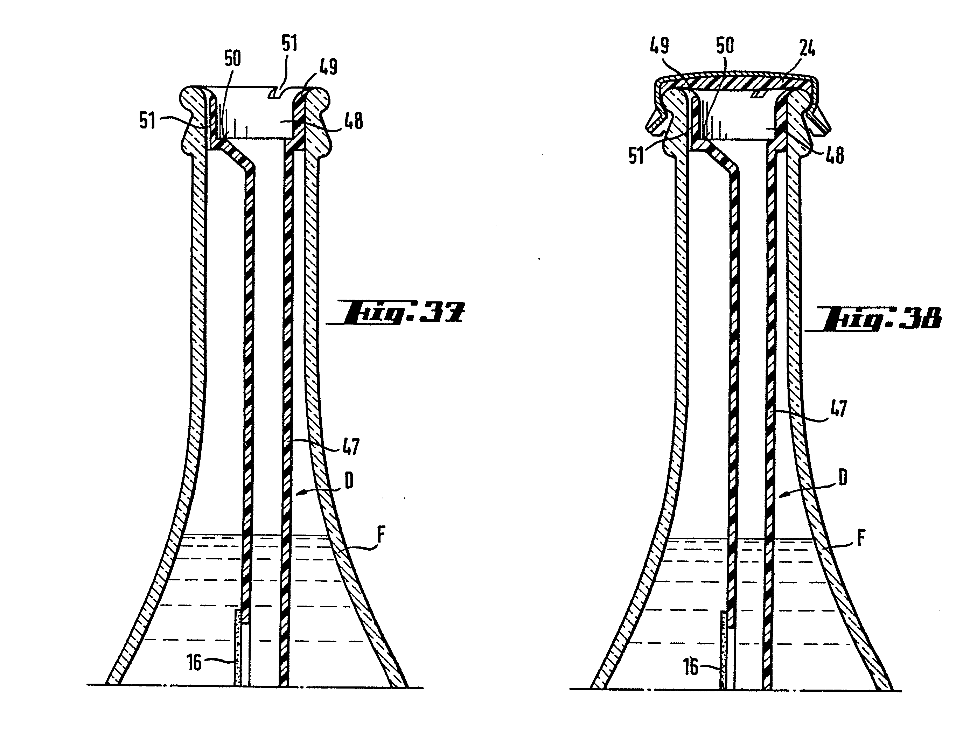

Fig. 33 einen Vertikalschnitt durch eine weitere Depot-
Variante mit Sektflasche,

Fig. 34 eine Perspektivansicht dieser Depot-Variante nach
Fig. 33,

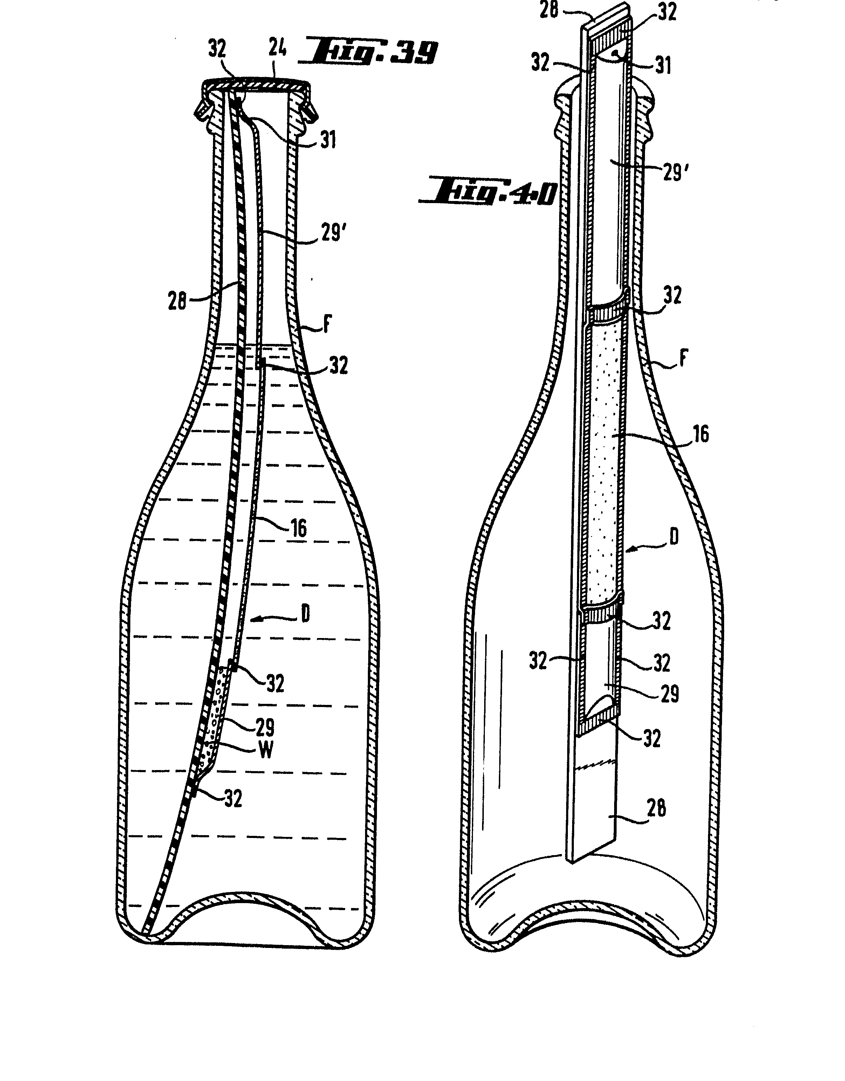

Fig. 35 einen Vertikalschnitt einer bevorzugten Depot-
Variante für die Flaschengärung nach der Linie
35-35 in Fig. 36,

Fig. 36 einen Querschnitt durch das Depot nach der Linie
36-36 in Fig. 35,

Fig. 37 einen Teil-Vertikalschnitt durch das im Flaschenhals positionierte Depot nach Fig. 35,

Fig. 38 einen Teil-Vertikalschnitt durch den mit Kronenkorken verschlossenen Flaschenhals mit Depot,

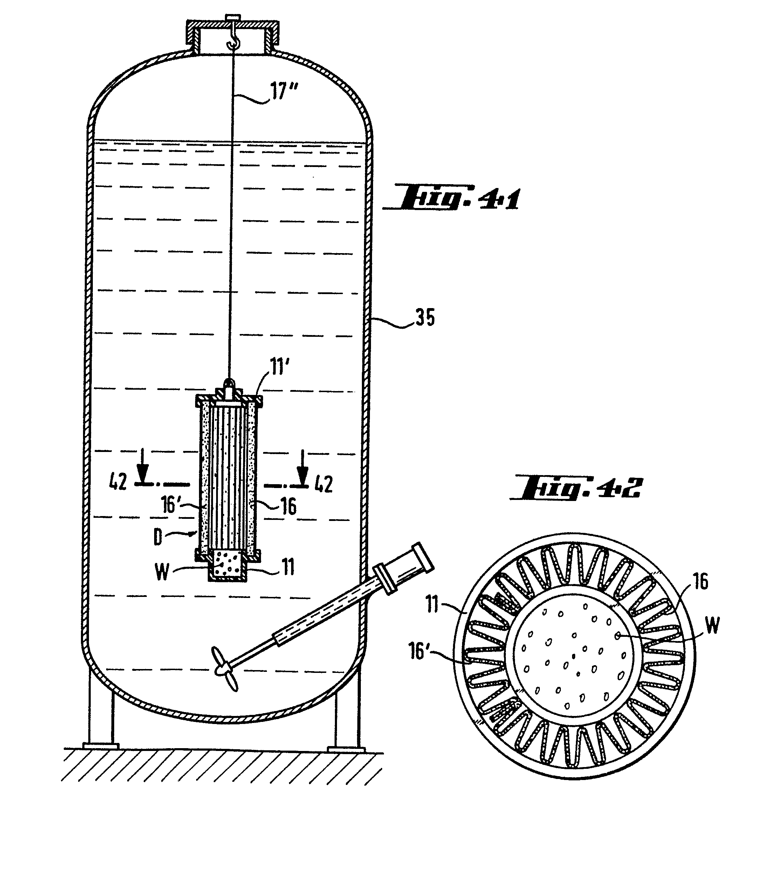

Fig. 39 einen Vertikalschnitt durch eine weitere Depot-
Variante mit geschlossener Sektflasche,

SM 8508

Fig. 40    eine Perspektivansicht dieser Depot-Variante bei
           geöffneter Sektflasche,

Fig. 41    schematisch einen Vertikalschnitt durch einen
           industriellen Gärbehälter mit eingelagertem
           Wirkstoffdepot,

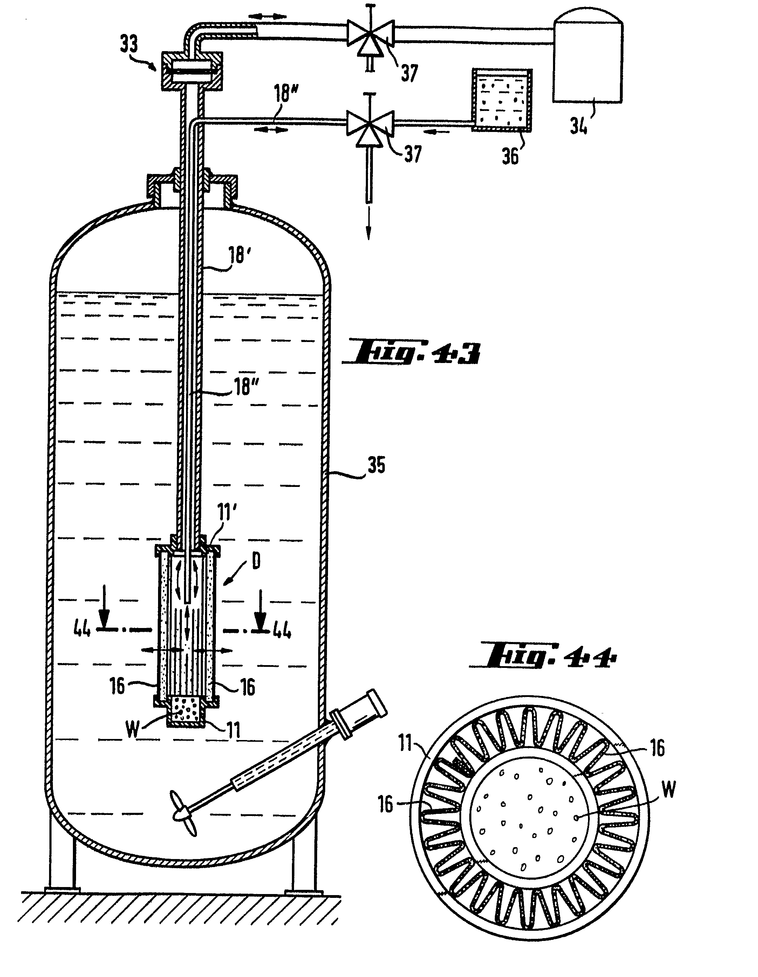

Fig. 42    einen Querschnitt durch das Depot nach Fig. 41,

Fig. 43    schematisch einen Vertikalschnitt durch einen
           Gärbehälter als Variante zu Fig. 41 und

Fig. 44    einen Querschnitt durch das Depot nach Fig. 43.

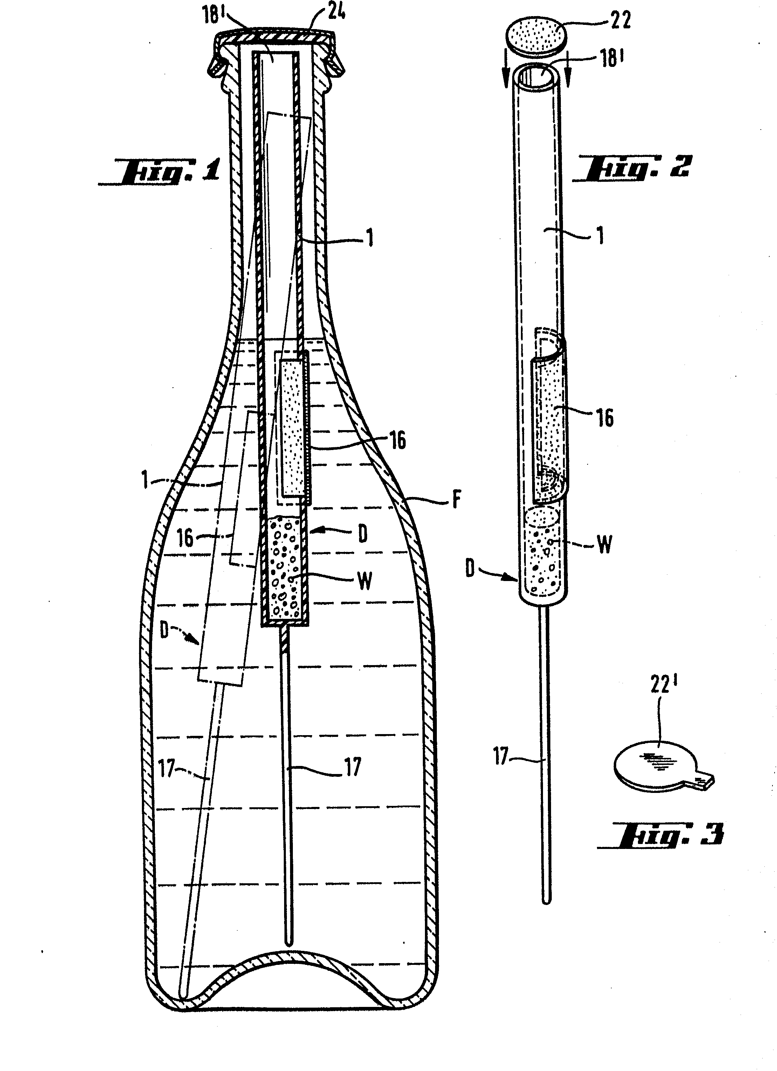

Gemäß Fig. 1 ist die Sektflasche F aufgefüllt mit einem
Sekt-Grundwein und zwar mit reduziertem Füllstand, d.h.
reduziert um das Volumen einer später aufzufüllenden
sogenannten Versanddosage. Der Sekt-Grundwein ist mit einer
bestimmten Menge Zucker angereichert, die für die Durchführung der zweiten Gärung notwendig ist. In die Flasche F
wird das Depot in Form eines Kunststoffhohlkörpers 1
eingeführt, der in dem vom Wein umspülten Bereich zumindest
teilweise selektiv permeable Scheidewände in Form einer
hydrophilen Membran 16 aufweist. Das Depot D stützt sich in
diesem Ausführungsbeispiel über einen Abstandshalter 17 auf
dem Flaschenboden ab und reicht mit seinem oben offenen
Ende als Depotöffnung 18' bzw. Gasauslaß bis dicht unter
den Flaschenverschluß 24. Der Kunststoffhohlkörper 1 in
Form eines oben offenen Röhrchens kann in der in Fig. 1
gezeigten Stellung vor dem Verschließen mit Wirkstoffen W
in Form von Hefen beschickt werden oder aber das Depot D
ist bereits vor Einführung in die Flasche F mit den Wirkstoffen W gefüllt. Für den Versand des Depots kann die
obere Öffnung des Depots gemäß Fig. 2 mit einem dauer-

SM 8508

haft verschließenden, hydrophoben und gasdurchlässigen Depotverschluß 22 in Form eines Membranfilters verschlossen oder aber gemäß Fig. 3 durch eine entfernbare Verschlußfolie 22' verschlossen sein. Dieses in Fig. 1 und 2 gezeigte oben offene Depot ermöglicht den ungehinderten Gasaustausch und Druckausgleich während der Gärung und den spontanen Druckausgleich beim Öffnen der Flasche F.

Die im Depot D eingelagerten Wirkstoffe W in Form von Hefen wandeln nach Verbrauch des Restsauerstoffs den Zucker des Weines in Ethanol und Kohlendioxid um. Das bei dem Gärprozeß entstehende Kohlendioxid wird teilweise als Kohlensäure über die Membran 16 und gasförmiges $CO_2$ über die Depotöffnung freigesetzt. Gemäß des $CO_2$-Partialdruckes löst sich $CO_2$ in der Flüssigkeit.

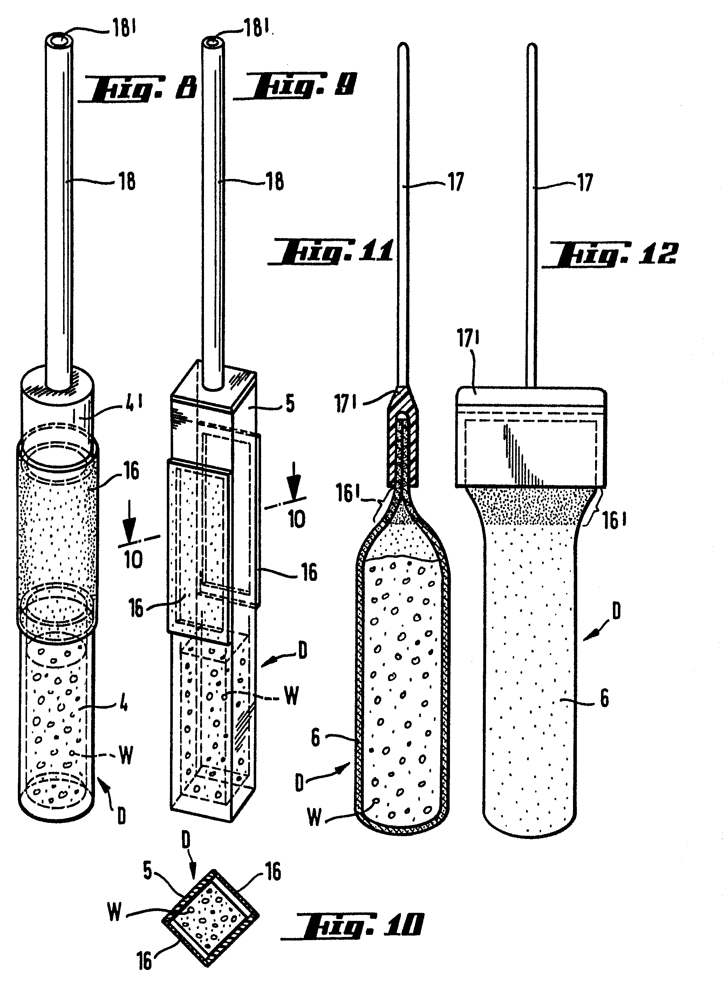

In der Ausführungsform nach Fig. 4 ist das Depot D in Form eines rohrförmigen Schwimmkörpers 2 mit quadratischem oder rundem Querschnitt ausgebildet und hat einen oberen rohrförmigen Abstandshalter 18, der gleichzeitig als Handhabe dient. Der Auftrieb wird durch die Wahl des Kunststoffes mit einer Dichte < 1 bzw. einer eingeschlossenen Luftkammer 23 erreicht. Der Auftrieb ist dabei zweckmäßigerweise so bemessen, daß das Depot bei geöffneter Flasche die in Fig. 6 gezeigte Stellung einnimmt, so daß eine Beschickung der Flasche F von Hand oder maschinell leicht möglich ist.

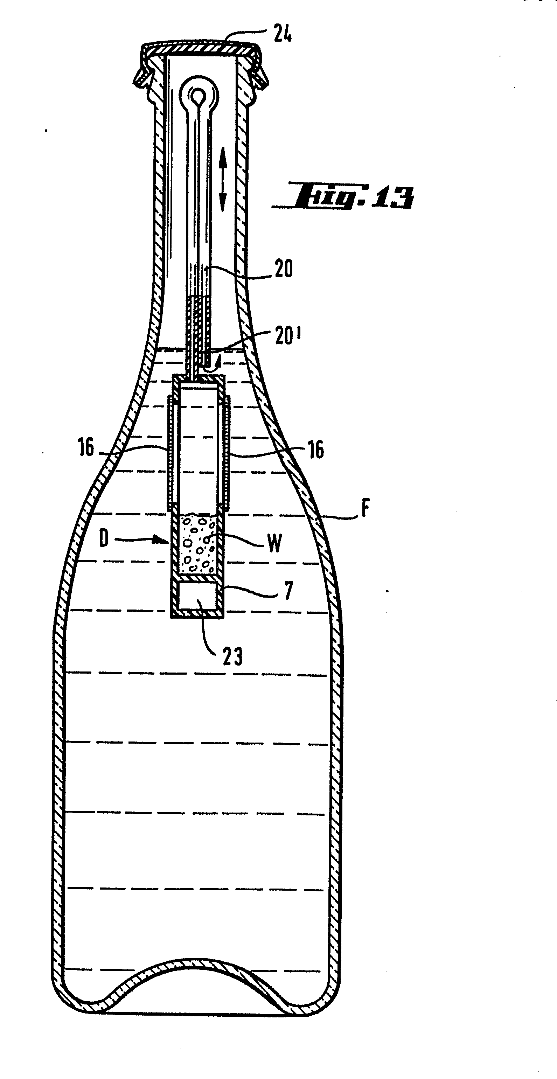

Bei der Ausführungsform gemäß Fig. 5 ist ein einfaches Rundrohr 3 auf der unteren Seite zur Vergrößerung der Membran- bzw. Austauschfläche schräg angeschnitten und mit einer hydrophilen Membran 16 verschlossen. Abstandshalter 17 oben und unten sorgen für eine definierte Lage des Kunststoffhohlkörpers 3 bzw. des Depots D in der Flasche F.

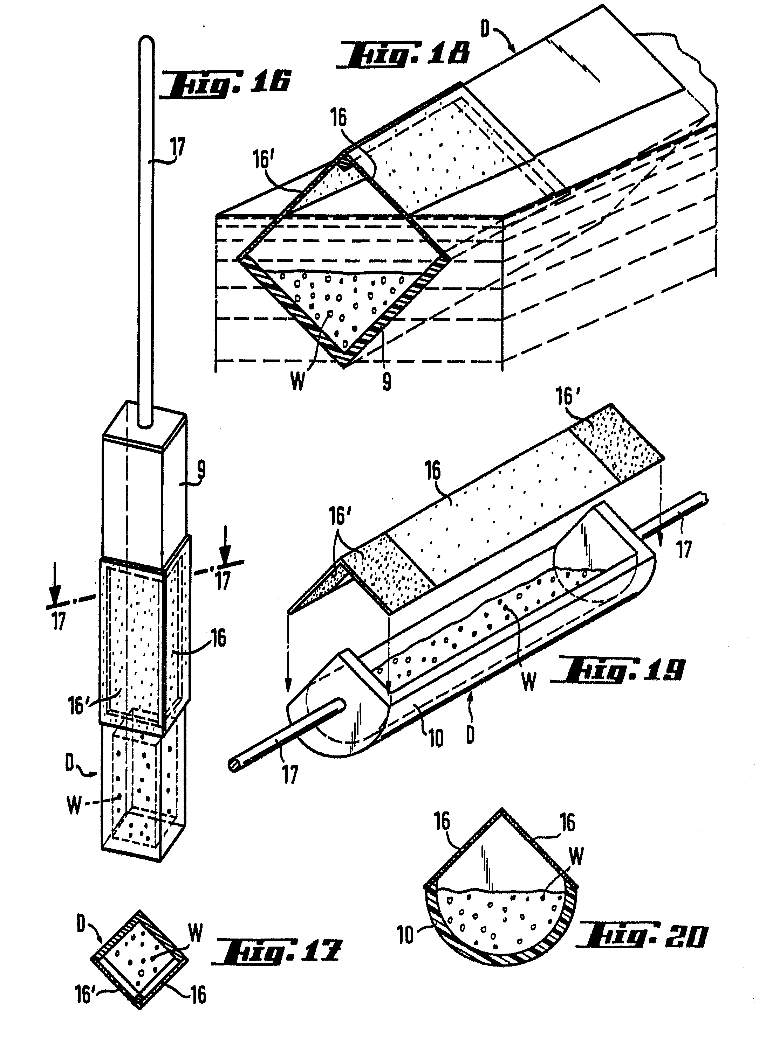

Bei dem speziellen Kronenkorkenverschluß 24 nach Fig. 7 aus Kunststoff ist auf dessen Unterseite eine Halterung 25 zur Aufnahme eines Depots D angeformt, dessen oberes Ende in Form eines Abstandshalters 18 oder 19 (Fig. 14) zur direkten Fixierung eines Depots dient. Eine solche Ausführungsform dient einmal der erleichterten maschinellen Beschickung und Entnahme des Depots und zum anderen einer vertikalen Fixierung eines Depots in bevorzugten Lagerstellungen der Flaschen F.

In der Ausführungsform gemäß Fig. 8 besteht das Depot D aus den beiden Rohrkörpern 4 und 4' sowie dem oben offenen Röhrchen 18. Die Verbindung beider Rohrstücke 4,4' ist durch ein hydrophiles Membranrohr 16 gegeben, welches auf die Ränder der beiden Kunststoffhohlkörper 4,4' aufgeschweißt oder aufgesiegelt ist.

Sinngemäß ist das Depot nach Fig. 9 und 10 aufgebaut, hier besteht der Kunststoffhohlkörper 5 aus einem Querschnitt quadratischen Rohr mit einem Röhrchen 18 als Abstandshalter und Handhabe. Zwei gegenüberliegende Fenster bzw. Durchbrechungen des Rohres sind durch aufgesiegelte hydrophile Membranfilter 16 verschlossen, wie im Schnitt gemäß Fig. 10 ersichtlich ist.

Bei der Ausführungsform nach Fig. 11 und 12 besteht das Depot D aus einem sackförmigen Membrankörper 6, welcher mit den Wirkstoffen W gefüllt ist und an seinem oberen Ende durch einen Kunststoffkörper 17' mit Handhabe und Abstandshalter 17 verschlossen ist. Um den Gasaustausch zu ermöglichen, ist der obere Bereich des Membrankörpers 6 als hydrophobierte und gasdurchlässige Randzone 16' ausgebildet.

Fig. 13 zeigt ein mit der Ausführungsform gemäß Fig. 9 vergleichbares Depot, bei der der Kunststoffhohlkörper 7 als Schwimmkörper ausgebildet ist und dessen Decke über ein Tauchrohr 20 einen Gasauslaß aufweist, dessen anderes offenes Ende 20' außerhalb des Depots dicht unter dem Flüssigkeitsspiegel endet. Das um 180° umgebogene Tauchrohr 20 endet kurz unter dem Flaschenverschluß 24 und kann sich als Auftriebskörper zwischen diesem Endanschlag und dem vom Auftrieb bestimmten Bewegungsspielraum bewegen.

Die beim Vergären frei werdende Kohlensäure bzw. Kohlendioxid kann sich im oberen Bereich des Depots D sammeln und das Tauchrohr füllen. Dadurch erhöht sich der Auftrieb. Das Röhrchen steigt in Richtung Flaschenverschluß 24 auf, wobei der Widerstand am offenen Ende 20' sinkt und das Gas in den Flaschenhals aufsteigen kann. Durch den Druckverlust sinkt das Depot D wieder in einen tieferen Bereich ab. Über die hydrophile Membran 16 füllt sich das Depot D wieder mit frisch zu vergärendem Wein aus der Flasche.

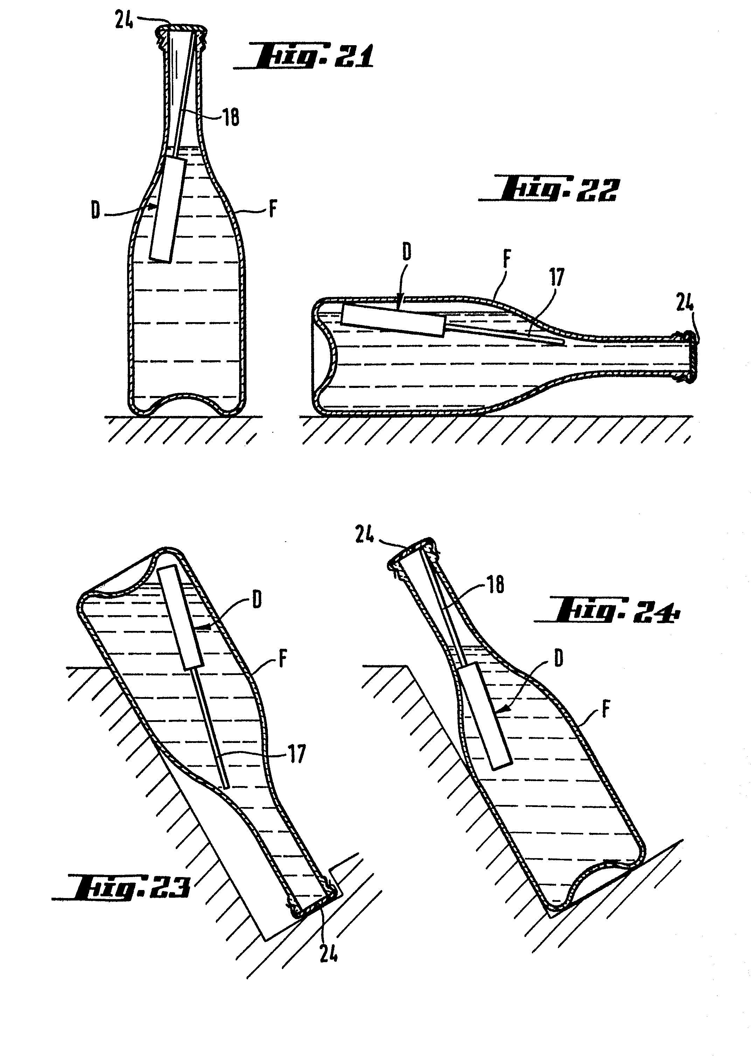

Bei der Ausführungsform nach Fig. 14 und 15 ist das Depot D als becherförmiger Kunststoffkörper 8 ausgebildet, dessen hydrophile Membran 16 mit hydrophoben und gasdurchlässigen Bereichen 16' zwischen den beiden Kunststoffteilen 8,8' dichtend eingeklemmt ist und entgegen einem inneren Druck kreuzförmig durch das Kunststoffteil 8' abgestützt ist. Das Depot D kann über einen Depotverschluß 21 in Form eines Schraub- oder Kegelverschlusses mit den Wirkstoffen beschickt werden. Auf der Gegenseite ist an dem die Membran 16 abstützenden Kunststoffteil 8' ebenfalls über eine Schraub- oder Kegelfixierung 19' ein Abstandshalter 19 bzw. Handhabe angeordnet. Für bestimmte Lagerstellungen bzw. für bestimmte Wirkstoffe W kann es zweckmäßig sein, den Depotverschluß 21 durch den Abstandshalter 19,19' zu ersetzen und zu verschließen.

SM 8508

Bei der Ausführungsform nach Fig. 16 bis 18 ist das Depot D durch einen im Querschnitt quadratischen Kunststoffhohlkörper 9 gebildet, der auf zwei nebeneinanderliegenden Seiten je eine Durchbrechung trägt, die von je einer Membran 16 bzw. 16' verschlossen ist. Dabei ist eine der Membran 16' als hydrophobe und gasdurchlässige Membran und die andere Membran 16 als hydrophile Membran ausgebildet. Durch die Nebeneinanderanordnung der beiden Membranen 16,16' hat das Depot D auch in liegender Position eine Schwerpunktslage, in der die Wirkstoffe W sich nicht auf den Membranflächen 16,16' durch Schwerkraft ablagern. Die Ablagerung erfolgt sowohl bei der vertikalen Ausrichtung als auch bei der horizontalen oder schrägen Ausrichtung in Bereichen, die nicht von Membranen 16,16' bedeckt sind.

Vergleichbar aufgebaut ist die Ausführungsform nach Fig. 19 und 20. Hier ist das Depot in Form eines trogförmigen Kunststoffkörpers 10 mit einer im Querschnitt dreieckförmigen hydrophilen Membran 16 abgedeckt, die an beiden Enden hydrophobierte und gasdurchlässige Bereiche 16' für den Gasaustausch aufweist. Mit diesen Ausführungsformen der Depots D läßt sich die Flaschengärung gemäß Fig. 21 bis 24 in den üblichen Lagerstellungen der Flaschen F durchführen. In den Lagerstellungen gemäß Fig. 22 und 23 müssen die Depots D jedoch allseitig geschlossen ausgebildet sein.

In der Ausführungsform nach Fig. 25 und 26 besteht das Depot D aus zwei zylinderförmigen Kunststoffkörpern 11 und 11' zwischen deren inneren Stirnseiten ein in Falten gelegtes hohlzylindrisch geformtes Filterelement 16,16' aus hydrophilen Abschnitten 16 und hydrophoben und gasdurchlässigen Abschnitten 16' dichtend integriert ist. Auf diese Weise wird eine sehr große Filterfläche geschaffen, die den Massenaustausch zwischen den Wirkstoffen W und der Flüssigkeit beschleunigt. Bei dieser Ausführungsform ist ebenfalls das Depot D über einen Depotverschluß 21 mit den Wirk-

SM 8508

stoffen W füllbar. Am Depotverschluß 21 kann auch eine Handhabe 17'' in Form eines am Behälterverschluß festlegbaren Drahtes oder dgl. angeordnet sein.

Bei der Ausführungsform nach Fig. 27 bis 32 sind die Depots D durch die als Hohlkörper 12,13,14 ausgebildeten Flaschenverschlußstopfen gebildet, die eine in den Flaschenhals reichende Öffnung aufweisen, die von einem hydrophilen Membranfilter 16 mit hydrophober und gasdurchlässiger Randzone 16' verschlossen ist. In der Ausführungsform nach Fig. 27,28,31 und 32 sind die Flaschenverschlüsse in Form von Stopfen mit Kopf ausgebildet.

Bei der Ausführungsform nach Fig. 29 ist das Depot D in einem Kunststoffkörper 13 untergebracht, der direkt als Kronenkorkenverschluß 24 gestaltet ist.

Bei der Ausführungsform nach Fig. 28 ist der zweiteilige Stopfen 12 mit einer Kopfplatte 12' ausgestattet, die auch noch nach dem Befüllen des Depots bei aufrecht stehender Flasche mit dem Stopfenbasisteil dichtend verschweißt werden kann.

In der Ausführungsform nach Fig. 31 hat der Stopfen 14 im Kopf einen Schraubverschluß 40 zum Befüllen des Depots D. Dieser Schraubverschluß 40 kann auch vor dem Entfernen des unter Druck stehenden Depots 14 zur sanften Entgasung des Depotraumes dienen. Da in der Flasche F am Ende des Gärprozesses ein Druck von etwa 5 bar herrscht, kann es beim Öffnen des Verschlusses zu einer Druckfiltration des Depotinhaltes in die Flasche erfolgen, wenn der Druckabfall in der Flasche beim Öffnen zu schnell erfolgt. Dieser Effekt kann weitgehend ausgeschaltet werden, indem das Öffnen der Flaschen F sehr langsam erfolgt bzw. der Druckausgleich zwischen Depotinhalt und Flascheninhalt über den hydrophoben und gasdurchlässigen Membranbereich 16' er-

SM 8508

folgt. Die hydrophile Membranfläche 16 hat gemäß Fig. 32 eine hydrophobe und gasdurchlässige Randzone 16' für den Gasaustausch.

Entsprechend sind die Membranflächen 16 bei den Ausführungsformen nach Fig. 27 bis 30 gestaltet.

Vorzugsweise ist der Flaschenverschlußstopfen 14 nach Fig. 31,32 als gasdichter, auch für die Endlagerung nach Beendigung der 2. Gärung geeigneter Stopfen ausgebildet.

Der Außenmantel des Stopfens ist mit einem Dichtungsmaterial 44 auf Korkbasis ausgestattet, der sich sowohl auf dem Oberrand als auch im Flaschenhals selbst als Pressitz anlegt. Eine Filterunterstützung 43 und gleichzeitige Radialversteifung erhöht den Pressitz. Zentral ist ein Schraubkonus 40, mit Gewinde 42 und Konus 41 als Verschluß- und Dichtungselement zur Befüllung und Entnahme des Depotinhaltes vorgesehen. Mit dem Schraubkonus 40 kann eine zusätzliche Spreizkraft in Richtung des umschließenden Flaschenhalses erzeugt werden. Ein den Schraubkonus 40 freilassender Drahtknebel 45 hält den Stopfen 14 am Flaschenhals fest.

Die Befüllung des Depots 14 mit Hefe W erfolgt entweder beim Lieferanten des Stopfens 14 mit Membran 16, beim Sekthersteller vor oder nach Eintreiben des Stopfens in die Flasche F.

Nach Beendigung der 2. Gärung können die Heferückstände über den Schraubkonus 40 entfernt (z.B. durch Absaugung) oder darin belassen werden. Konzentrierte Versanddosage wird eingefüllt und der Schraubkonus 40 danach durch den Sekthersteller über eine zusätzliche Verschweißung 42' mit dem Stopfenkörper unlösbar verbunden. Auf diese Weise wird ein Lösen des Schraubkonus zwecks unzulässiger Manipulation ausgeschlossen.

SM 8508

- 17 -

0236751

Es ist auch möglich, eine die Endsüße des Sektes bestimmende Zuckermenge zusammen mit der darauf abgestimmten Menge Hefe in das Depot 14 einzulagern und mit dem Stopfen die Gärung, Lagerung und Reifung bis zum Verbrauch durch den Endverbraucher durchzuführen.

Bei der Ausführungsform nach Fig. 31A ist anstelle der hydrophobierten Randzone am hydrophilen Filter 16 ein hydrophober und gasdurchlässiger Filter 16' z.B. aus PTFE in eine seitliche Öffnung 24 des Stopfens 14 eingesiegelt.

Das Volumen der Depots ist vorzugsweise so zu bemessen, daß einerseits eine Sedimentierung der Hefe in einer Tasche, eine freie Bewegung der Hefe im Depot und eine große Austauschfläche (Membranfläche 16,16') gewährleistet ist und andererseits das durch Entnahme des Depots mit entnommene Sektvolumen möglichst klein gehalten wird.

Die Depot-Variante nach Fig. 33,34 ist eine bevorzugte Ausführungsform für die Flaschengärung bei stehender Lagerung der Flasche und zwar im Hinblick auf die vorgenannten Kriterien und unter den Kriterien einer maschinellen Beschickung des Depots mit Hefe und der Beschickung und Entnahme des Depots aus der Flasche.

Das Depot D besteht aus einem einstückigen Kunststoffhohlkörpers 27 (z.B. in Spritztechnik gefertigt), der im Bereich seines aus der Flüssigkeit herausragenden Abschnittes einen runden Querschnitt hat und durch mehrere radial abstehende Zentrier- und Fixierungsrippen 30 im Flaschenhals durch Reibung festlegbar ist. Der in die Flüssigkeit eintauchende Bereich hat eine untere schmale Tasche zur Ablagerung der Wirkstoffträger W bzw. Hefereste und einen schmalen Abschnitt, auf dem die relativ große Membran 16 aufgesiegelt ist. Die obere Öffnung kann dicht mit der im Kronkorkverschluß 24 integrierten Auflagescheibe aus PVC abschließen, so daß beim Transport aufschwappende Flüssigkeit und Hefe aus dem Depot praktisch nicht nach

SM 8508

außen dringen kann. Eine Entgasungsöffnung 31 sorgt für den Druckausgleich. Das Sektvolumen im Depot D kann gegebenenfalls während der Depot-Entnahme durch Druckluft filtrierend in den Flascheninhalt oder später in Sammelbehälter entleert werden.

Fig. 35 bis 38 zeigt eine weitere bevorzugte Depot-Variante in Form eines einstückigen Kunststoffhohlkörpers 47, der einen der Flaschenhalsöffnung angepaßten Trichter 48 zur Zentrierung und axialen Fixierung durch einen abstehenden Oberrand 49 aufweist. Das eigentliche Depot zur Aufnahme der Wirkstoffe ist schmaler gehalten. Spontan aufsteigende Hefezellen können sich im Trichter beruhigen. Eine oder mehrere kanalartige Einkerbungen 51 im Trichterrand gewährleisten einen Gasaustausch auch, wenn der Kronenkorkenverschluß 24 nach Fig. 38 den Oberrand des Trichters erfassen sollte. Auch diese Ausführungsform eignet sich besonders für die maschinelle Versorgung und Entsorgung der Sektflaschen F.

Im Trichterteil ist zusätzlich eine Schulter 50 angeformt, die zur Aufsiegelung eines hydrophoben und gasdurchlässigen Filters dienen kann, wenn das Depot D aus Sicherheitsgründen geschlossen ausgebildet sein soll, so daß auch eine andere Lagerung der Flasche als die aufrechte möglich ist. Die Filtermembran 16 ist hydrophil.

Sinngemäß sind die vorgenannten Kriterien bei der Ausführungsform nach Fig. 39 und 40 berücksichtigt. Das Depot D besteht aus einem der Flaschenlänge angepaßten Kunststoffstreifen 28, z.B. aus Polypropylen PP und einem dünnen Streifen PP-Folie 29, hydrophilen Membranfilter 16 und PP-Folie 29', die durch Schweißnähte 32 miteinander und mit dem Kunststoffstreifen 28 derart verbunden sind, daß ein im Querschnitt bauchiges (plankonvexes) Depot D entsteht, welches die Wirkstoffe und Wirkstoffträger W aufnimmt. Über eine Entgasungsöffnung 31 (Nadelstich) ist der Druckausgleich gewährleistet.

SM 8508

Diese Konstruktionsart erlaubt durch Veränderung der Länge des Teiles 28 und Verhältnisse von Membranfläche 16 und Folienabschnitte 29,29' sich den verschiedenen Bedürfnissen und Flaschengrößen bzw. Behälterformen anzupassen. Der Kunststoffhohlkörper 28,29,29',16 nimmt im eingelagerten Zustand die in Fig. 39 gezeigte Stellung ein und ist demgemäß leicht zu handhaben.

Bei der Ausführungsform nach Fig. 41 ist ein Depot nach Fig. 25 und 26 in einem industriellen Gärbehälter 35 oder im Faß eingelagert. Dieses plissierte Filterelement 16,16' besteht aus einem hydrophilen Umfangsabschnitt 16 und einem hydrophoben und gasdurchlässigen Umfangsabschnitt 16'.

Die Gärung kann durch mehrere eingelagerte Depots D beschleunigt werden. Ein Teil der Depots D kann nach Abschluß der Gärung entnommen und für neu angesetzte Gärungen nach der Regeneration der Depots und Neueinlagerung von Wirkstoffen erneut verwendet werden. Ein Teil der Depots kann zur Autolyse der Hefe im Behälter verbleiben.

Bei der Ausführungsform nach Fig. 43 ist das Depot D in Form einer hydrophilen Filterkerze 11,11',16 über ein Verbindungsrohr 18' außerhalb des geschlossenen Gärbehälters 35 an einen Vorratsbehälter 34 für inertes Gas z.B. Stickstoff anschließbar. Ein Gasfilter 33 verhindert Sekundärkontaminationen. In einem Bypass 18'' zur Leitung 18' ist diese an einen Vorratsbehälter 36 für Flüssigkeit z.B. weitere Wirkstoffe anschließbar. Absperrventile 37 sorgen für die Beibehaltung eines kontaminationssichern Systems und die Möglichkeit der variablen Leitungsabsperrung. Mit dieser Anordnung kann erreicht werden, daß z.B. bei der Sektherstellung der Austausch der im relativ kleinen Depot eingeschlossenen Kulturbrühe mit dem Behälterinhalt über die Filterfläche 16 in beiden Richtungen zwangsweise filtrierend erfolgt.

SM 8508

Dazu wird durch Beaufschlagung des Depots D über die
Leitung 18' der Depotinhalt bis auf die im Bodenteil sich
ablagernden Wirkstoffträger W mit Stickstoff, Kohlendioxyd
oder anderem geeigneten Gas ausgepresst. Bei nachfolgender
Entlastung über das Ventil 37 füllt sich das Depot D wieder
mit neuer Flüssigkeit aus dem Behälter. Dieser Vorgang kann
z.B. in Intervallen erfolgen.

Über den Bypass 18''zur Leitung 18' ist durch Probeentnahme
oder Sensorik der aktuelle Zustand des Depotinhaltes
kontrollierbar. Sinngemäß eignet sich diese Vorrichtung für
andere Bioreaktoren z.B. Fermenter, um Reaktionen und
Umsetzungen zu steuern.

Das Material der Kunststoffkörper besteht vorzugsweise aus
Polypropylen, Polyäthylen oder einem anderen sich in der
Getränkeindustrie bewährtem Kunststoff. Für die Ausbildung
als Schwimmkörper werden Kunststoffe mit einer Dichte < 1
gewählt.

Für den Austausch von Flüssigkeit und Gas sind geschmacksneutrale und inerte Membranfilter (Mikrofilter, Ultrafilter) zu wählen. Diese können z.B. aus Zellulosederivaten wie Zellulosenitrat oder Zelluloseacetat, aus
Nylon 66, PTFE, PP, Polysulfon bestehen. Die Porengröße
liegt je nach den in Frage kommenden Wirkstoffen und
Wirkstoffträger bzw. Größe der Wirkstoffrückstände zwischen
0,15 um und 5 um. Für Ultrafilter können Filter mit einer
Ausschlußgrenze cut off 10 000 bis 300 000 Verwendung
finden. Der Stoffaustausch ist umso besser, je größer die
Porengröße bzw. der Cut off-Wert ist. Andererseits muß
sichergestellt sein, daß z.B. Hefezellen nicht durch die
Poren der Membran hindurchwachsen. Es hat sich daher als
vorteilhaft erwiesen, daß die Hefen nicht unmittelbar auf
den Membranflächen liegen, wenn diese in die Flüssigkeit
eintaucht. Vorzugsweise sollen die Hefezellen die Mög-

SM 8508

0236751

lichkeit haben, sich auf unporösen Flächen des Depots, z.P in tiefgelegenen Taschen abzulagern. Die Hefe in Form einer Trockensubstanz kann selbstverständlich während ihrer inaktiven Phase im Depot auf Membranflächen 16,16' lagern.

Nach Abschluß der Gärung und einer Lager- und Reifezeit bis zu den derzeit gesetzlich vorgeschriebenen 9 Monaten kann auf einfache Weise das Depot D mit den Wirkstoffrückständen der Flasche entnommen werden, ohne daß deren Inhalt umgefüllt und einer weiteren Filtrationsstufe unterzogen werden muß. Dieser einer zweiten Gärung unterzogene Wein ist mit Kohlensäure angereichert und der Geschmackstyp des Sektes wird durch Zugabe einer sogenannten Versanddosage, bei der es sich um in Wein aufgelöstem Zucker handelt, bestimmt. Die erfindungsgemäße Art der quantitativen Entfernung der Hefe durch Entnahme des Depots garantiert, daß die Zuckermenge aus der Versanddosage keiner Nachgärung unterliegt, was zu einer unerwünschten Geschmacksveränderung und zu einem Überdruck bis zum Bersten der Flasche führen würde. Außerdem kann keine Trübung und Geschmacksveränderung durch Resthefe bzw. Hefeautolyseprodukte erfolgen, wie dies bei nicht vollkommener Entfernung nach klassischen Verfahren vorkommen kann. Danach erfolgt der endgültige Verschluß der Flaschen mit einem Verschlußstopfen mit Kopf und dessen Festlegung am Flaschenhals mittels eines Drahtknebels 45.

SM 8508

0236751

Ansprüche:

1. Depot mit selektiv permeablen Scheidewänden in Form von porösen Filter-Membranen oder porösen Filterkörpern zur Einlagerung und quantitativen Entnahme von Wirkstoffen und Wirkstoffträgern in Form von Hefen oder Mikroorganismen in Flüssigkeiten zur Herstellung gashaltiger Getränke mittels Gärung oder Fermentation in Behältern, dadurch gekennzeichnet, daß das Depot einen den Flüssigkeitsaustausch zwischen Depotinhalt und Behälterinhalt fördernden hydrophilen selektiv permeablen Bereich (16) und einen den Gasaustausch und den Druckausgleich zwischen Depotinhalt und Behälterinhalt fördernden Gasauslaß (16',18',31,48,51) aufweist.

2. Depot nach Anspruch 1, dadurch gekennzeichnet, daß der Gasauslaß durch eine oberhalb des Flüssigkeitsspiegels des Behälters liegende Depotöffnung (18',24,31,48,51) gebildet ist.

3. Depot nach Anspruch 1, dadurch gekennzeichnet, daß der Gasauslaß durch einen hydrophoben und gasdurchlässigen Bereich (16',22) des Depots gebildet ist.

4. Depot nach Anspruch 1, dadurch gekennzeichnet, daß der Gasauslaß (18') durch ein in den Gasraum des Behälters (F) reichendes Entgasungsrohr (1,18,27,48) gebildet ist, welches bis in den Bereich des Behälterverschlusses (24) bzw. der Behälteröffnung reicht.

SM 8508

5. Depot nach Anspruch 1 bis 4, <u>dadurch gekennzeichnet</u>, daß das Depot als sich am Behälterverschluß (24) abstützender Auftriebskörper (D,2,4,5,6,7,8,9,10) ausgebildet ist.

6. Depot nach Anspruch 1 und 5, <u>dadurch gekennzeichnet</u>, daß die Depotöffnung (20') durch ein dicht unterhalb des Flüssigkeitsspiegels des Behälters (F) mündendes Tauchrohr (20) gebildet ist.

7. Depot nach Anspruch 1, <u>dadurch gekennzeichnet</u>, daß das Depot (2) am Behälterverschluß (24) fixiert ist.

8. Depot nach Anspruch 1 bis 4, <u>dadurch gekennzeichnet</u>, daß das Depot ein sich auf dem Behälterboden abstützenden Abstandshalter (17) aufweist.

9. Depot nach Anspruch 1 bis 4, <u>dadurch gekennzeichnet</u>, daß das Depot (D,14,27,47) zur Fixierung in der Behälteröffnung radiale und/oder axiale Fixierungselemente (30,44,49) aufweist.

10. Depot nach Anspruch 1 und 3, <u>dadurch gekennzeichnet</u>, daß das Depot (D,12,12',13,14) Bestandteil des Behälterverschlusses ist bzw. diesen bildet.

11. Depot nach Anspruch 1 bis 10, <u>gekennzeichnet durch</u> einen Kunststoffhohlkörper mit mikroporösen Membranfilterabschnitten (16,16') für den Stoffaustausch.

12. Depot nach Anspruch 1 bis 11, <u>dadurch gekennzeichnet</u>, daß das Depot (D) zur Aufnahme von durch Schwerkraft sedimentierender Wirkstoffrückstände schalenförmige oder sackförmige undurchlässige Bereiche außerhalb der den Stoffaustausch ermöglichenden porösen Depotabschnitten (16,16') aufweist.

SM 8508

13. Depot nach Anspruch 1 bis 12, dadurch gekennzeichnt, daß die Porengröße der selektiv permeablen Scheidewände (16,16'), insbesondere die der hydrophilen Scheidewände (16) vorzugsweise zwischen 0,2 und 3 µ liegt.

14. Depot nach einem der Ansprüche, dadurch gekennzeichnet, daß der Kunststoffhohlkörper (10) trogartig ausgebildet ist, dessen eine (offene) Trogseite den Membranfilter (16,16') trägt.

15 Depot nach einem der Ansprüche, dadurch gekennzeichnet, daß das Depot (D) durch einen Rund- oder Quadratrohrabschnitt (3) gebildet ist, dessen die Membran (16) aufnehmende Fläche durch einen Schrägflächenquerschnitt gebildet ist.

16. Depot nach einem der Ansprüche, dadurch gekennzeichnet, daß das Depot (D) durch einen im Querschnitt quadratischen Hohlkörper (5) gebildet ist, auf dessen zwei einander gegenüberliegenden Seiten Durchbrechungen angeordnet sind, die durch Membranfilter (16,16') verschlossen sind.

17. Depot nach einem der Ansprüche, dadurch gekennzeichnet, daß das Depot (D) durch einen im Querschnitt quadratischen Hohlkörper (9) gebildet ist, auf dessen zwei aneinandergrenzenden Seiten Durchbrechungen angeordnet sind, die durch Membranfilter (16,16') verschlossen sind.

SM 8508

18. Depot nach einem der Ansprüche, dadurch gekennzeichnet, daß das Depot (D) durch einen mikroporösen, sackförmigen Membranhohlkörper (6,6') gebildet ist, der auf dem zum Behälterverschluß (24) weisenden Ende einen als Handhabe dienenden Verschlußkörper (17,17') aufweist.

19. Depot nach einem der Ansprüche, dadurch gekennzeichnet, daß das Depot (D) durch einen becherförmigen Kunststoffkörper (8) gebildet ist, dessen Boden einen Depotverschluß (21) und dessen offene Seite durch ein Membranfilter (16,16') verschlossen ist, das außenseitig durch ein mit dem Becherteil (8) verbundenes Abstützungsteil (8') verbunden ist und eine lösbare Handhabe (19) aufweist, deren eines Ende auch als Verschluß für die Depotöffnung verwendbar ist.

20. Depot nach einem der Ansprüche, dadurch gekennzeichnet, daß die selektiv permeable Scheidewand aus einem hohlzylindrischen Membrankörper (16,16') besteht, der vorzugsweise aus einer in eine Vielzahl von Falten gelegten Flachfilterzuschnitt gebildet ist, dessen Stirnflächen dichtend mit je einer Endkappe (11,11') aus Kunststoff verschlossen sind.

21. Depot nach einem der Ansprüche, dadurch gekennzeichnet, daß bei einem zylindrischen Filterelement der Filtermantel aus einem hydrophilen Umfangsteil (16) und einem hydrophoben und gasdurchlässigen Umfangsteil (16') besteht.

22. Depot nach einem der Ansprüche, dadurch gekennzeichnet, daß das Depot (D) durch einen Kunststoffstreifen (28) als Träger für auf eine Seite des Trägers bauchig aufgesiegelte Abschnitte aus Kunststoffolie (29), Membranfilter (16) und Kunststoffolie (29') gebildet ist, die miteinander dichtend und mit dem Träger (28) zu einem Hohlkörper verbunden sind.

SM 8508

23. Depot nach einem der Ansprüche, **dadurch gekennzeichnet**, daß das Depot (D) eine Einfüllöffnung für den Depotinhalt aufweist, die durch einen Verschluß (21, 22',42) in Form eines Luer-Konus, Luer-Lock, Schraubverschluß oder dergleichen verschließbar ist.

24. Depot nach einem der Ansprüche, **dadurch gekennzeichnet**, daß eine Handhabe (18,19) des Depots (D) lösbar mit einem am Behälterverschluß (24) integrierten Halterung (25) verbunden bzw. verbindbar ist.

25. Depot nach einem der Ansprüche, **dadurch gekennzeichnet**, daß das Fixierungselement (25) auf der in die Behälteröffnung weisenden Seite eines Kronkorkenverschlusses oder eines Verschlußstopfens mit Kopf inte-griert ist.

26. Depot nach einem der Ansprüche, **dadurch gekennzeichnet**, daß das Depot (D) mittels einer Depotleitung (18',18'') außerhalb des das Depot (D) aufnehmenden Behälters (35) an eine Gasquelle (34) und/oder eine Wirkstoffquelle (36) anschließbar und das Depot (D) über diese Depotleitung (18',18'') mit die Reaktion oder Umsetzung im Depot (D) und/oder Behälter (35) beschleunigenden oder verzögernden Mitteln versorgbar und entsorgbar ist.

27. Depot nach Anspruch 1, **dadurch gekennzeichnet**, daß das Depot (D) zur Einlagerung in einem Behälter in Form einer Getränkeflasche (F) durch einen einstückigen, sich auf der Innenseite des Flaschenhalses radial und/oder axial festlegenden Kunststoffhohlkörper (27, 47) gebildet ist, dessen in den Gasraum der Getränkeflasche (F) ragender Bereich (48) im inneren Querschnitt größer gehalten ist, als der die Wirkstoffe (W) und den Membranfilterabschnitt (16) aufnehmende und in die Flüssigkeit eintauchende Bereich des Kunststoff-hohlkörpers (27,47).

SM 8508

28. Depot nach Anspruch 1, <u>gekennzeichnet durch</u> einen stopfenförmigen Kunststoffhohlkörper (12,13,14) als Verschluß für eine Getränkeflasche (F), dessen in die Flaschenöffnung eingreifender Teil mindestens eine Durchbrechung aufweist, die als Aufnahmelager für ein diese verschließendes Filterelement (16,16') bildet und dessen sich über den Oberrand der Flaschenöffnung legender Teil als Dichtungsrand ausgebildet ist.

29. Depot nach Anspruch 28, <u>dadurch gekennzeichnet</u>, daß der Kunststoffhohlkörper (13) mit seiner Decke in einem Kronenverschlußblech (24) integriert ist, dessen Rand über einen Wulst der Getränkeflasche (F) kröpfbar ist.

30. Depot nach Anspruch 28, <u>dadurch gekennzeichnet</u>, daß der Kunststoffhohlkörper (12,14) als in den Flaschenhals der Getränkeflasche (F) einpreßbarer Stopfen (12,14) mit Kopf ausgebildet ist, der mit einem Knebelungselement (45) am Flaschenhals festlegbar ist.

31. Depot nach Anspruch 30, <u>dadurch gekennzeichnet</u>, daß der Kunststoffhohlkörper (14) als in den Flaschenhals einer Getränkeflasche (F) einpreßbarer Stopfen mit Kopf ausgebildet ist, der in seiner Decke eine verschließbare Füllöffnung für den Hohlkörper hat und dessen in den Flaschenhals einführbarer Teil mit mindestens einer Öffnung versehen ist, die durch ein randseitig aufgeklebtes, aufgesiegeltes oder aufgeschweißtes Filterelement (16,16') verschlossen ist, das einen Massenaustausch zwischen dem Flascheninhalt und einem im Depot (D) einschließbaren Wirkstoff mit Wirkstoffträgern (W) zuläßt, und daß der Stopfen mit Kopf mit einem Knebelungselement (45) am Flaschenhals festlegbar ist.

SM 8508

32. Depot nach Anspruch 31, dadurch gekennzeichnet, daß die Füllöffnung durch einen Schraubkonus (40,41) verschließbar ist und der Konus (41) zur Ausübung einer radialen Spreizkraft auf den in den Flaschenhals einpreßbaren Dichtabschnitt (44) des Stopfens (14) in den Flaschenhals hineinreicht.

33. Verfahren unter Verwendung eines Depots mit selektiv permeablen Scheidewänden in Form von porösen Filter-Membranen oder porösen Filterkörpern zur Einlagerung und quantitativen Entnahme von Wirkstoffen und Wirkstoffträgern in Form von Hefen oder Mikroorganismen in Flüssigkeiten zur Herstellung gashaltiger Getränke mittels Gärung oder Fermentation in Behältern, wobei das Depot einen den Flüssigkeitsaustausch zwischen Depotinhalt und Behälterinhalt fördernden hydrophilen selektiv permeablen Bereich und einen den Gasaustausch und den Druckausgleich zwischen Depotinhalt und Behälterinhalt fördernden Gasauslaß aufweist, dadurch gekennzeichnet, daß die Wirkstoffe und Wirkstoffträger (W) in das Depot (D) eingeschlossen werden, nachdem das Depot (D) im Behälter (F) deponiert ist.

34. Verfahren nach Anspruch 33, dadurch gekennzeichnet, daß die Wirkstoffe und Wirkstoffträger (W) in das Depot (D) eingeschlossen werden, nach einer zeitlich begrenzten Aktivierung dem Depot (D) wieder entnommen und gegebenenfalls durch andere Wirkstoffe und Wirkstoffträger (W) ersetzt werden, ohne das Depot (D) aus dem Behälter (F) zu entfernen.

SM 8508

35. Verfahren nach Anspruch 33 und 34, _dadurch gekennzeichnet_, daß die Wirkstoffe und Wirkstoffträger (W) in das Depot (D) eingeschlossen werden, nachdem der Behälter (F) durch einen das Depot (D) bildenden Verschlußkörper (14) mit Depotfüllöffnung verschlossen ist.

36. Verfahren nach Anspruch 33 und 34, _dadurch gekennzeichnet_, daß die im Behälter und eingelagertem Depot (D) initierten Fermentationsprozesse über in das Depot eingeführte Versorgungs- und Entsorgungsleitungen (18',18'') von außen gesteuert werden.

SM 8508

**Fig. 1**

**Fig. 2**

**Fig. 3**

**Fig. 4**

**Fig. 5**

**Fig. 6**

**Fig. 7**

Fig. 8

Fig. 9

Fig. 11

Fig. 12

Fig. 10

**Fig. 13**

_Fig. 14_

_Fig. 15_

*Fig. 16*

*Fig. 18*

*Fig. 19*

*Fig. 17*

*Fig. 20*

Fig. 21

Fig. 22

Fig. 23

Fig. 24

0236751

_Fig. 25_

_Fig. 26_

**Fig. 27**

12

D

W

16

16'   16'

24

13

W

F

16

16'   16'

**Fig. 28**

**Fig. 28**

16'

D

W

16

45

12'

**Fig. 30**

24   13   D   16, 16'   F

W

_Fig: 31_

_Fig: 31A_

_Fig: 32_

*Fig. 33*

*Fig. 34*

Fig. 35

Fig. 36

_Fig. 37_

_Fig. 38_

13 / 16

0236751

0236751

Fig. 39

Fig. 40

Fig. 41

Fig. 42

Fig. 43

Fig. 44